# EUROPÄISCHE PATENTSCHRIFT

(11) **EP 3 655 297 B1**
(45) Veröffentlichungstag und Bekanntmachung des Hinweises auf die Patenterteilung: **24.08.2022**
(21) Anmeldenummer: 18731814.2
(22) Anmeldetag: 14.06.2018
(51) Int. Cl.: B60T 8/88

(54) **VORRICHTUNG UND VERFAHREN ZUM BETREIBEN EINES BREMSSYSTEMS EINES KRAFTFAHRZEUGS**
DEVICE AND METHOD FOR OPERATING A BRAKING SYSTEM OF A MOTOR VEHICLE
DISPOSITIF ET PROCÉDÉ DE FONCTIONNEMENT D'UN SYSTÈME DE FREINAGE D'UN VÉHICULE À MOTEUR

(30) Priorität: 19.07.2017 DE 102017212359
(43) Veröffentlichungstag der Anmeldung: 27.05.2020
(73) Patentinhaber: Robert Bosch GmbH, 70442 Stuttgart (DE)
(72) Erfinder: KOERNER, Gotthilf, 71287 Weissach (DE); OBENLAND, Ruben, 71723 Grossbottwar (DE); LIMBACH, Oda, 70469 Stuttgart (DE); HOESS, Stefan, 74394 Hessigheim (DE); RIEDEL, Simon, 71723 Grossbottwar (DE)
(86) Internationale Anmeldenummer: PCT/EP2018/065787
(87) Internationale Veröffentlichungsnummer: WO 2019/015890

(56) Entgegenhaltungen:
- EP-A2- 0 379 669
- WO-A2-2009/019022
- DE-A1- 10 060 702
- DE-A1- 10 307 509

## Beschreibung

Die Erfindung betrifft eine Vorrichtung zum Betreiben eines Bremssystems eines Kraftfahrzeugs, mit einer ersten Steuereinheit zum Betreiben einer ABS-Einrichtung des Bremssystems und mit einer zweiten Steuereinheit zum Betreiben einer Bremskraftunterstützungseinrichtung des Bremssystems.

Weiterhin betrifft die Erfindung ein Verfahren zum Betreiben eines Bremssystems eines Kraftfahrzeugs mittels der oben genannten Vorrichtung.

### Stand der Technik

Vorrichtungen und Verfahren der eingangs genannten Art sind aus dem Stand der Technik bekannt. Heutige Kraftfahrzeuge weisen Bremssysteme auf, die sowohl eine ABS-Einrichtung zum Vermeiden blockierender Räder sowie eine Bremskraftunterstützungseinrichtung zum Erleichtern der Bremsbetätigung aufweisen. Mittlerweile sind Bremskraftunterstützungseinrichtungen bekannt, die den Fahrer bei der Betätigung des Bremspedals außerdem nicht durch einen herkömmlichen Vakuumbremskraftverstärker unterstützen, sondern elektromotorisch beziehungsweise elektromagnetisch. Für diese ist eine zusätzliche Steuereinheit notwendig, welche das Verhalten des Bremssystems in Abhängigkeit der Betätigung des Bremspedals steuert beziehungsweise regelt. Der ABS-Einrichtung ist eine eigene Steuereinheit zugeordnet, welche ein oder mehrere Ventile im Bremssystem ansteuert, um bei Bedarf einen Hydraulikdruck, der auf Radbremsen wirkt, zu reduzieren, sodass eine Bremskraft verringert und ein zu blockieren drohendes Rad am Blockieren gehindert wird. Bisher werden die Funktionen der ABS-Einrichtung und der Bremskraftunterstützungseinrichtung im Fahrzeug durch voneinander getrennte Steuergeräte realisiert. Im Zuge der Vereinheitlichung und Vereinfachung von Steuersystemen werden Steuergeräte angestrebt, die beide Funktionen, also die Funktion der ABS-Steuerung und der Bremskraftunterstützung in sich vereinen.

Aus der Offenlegungsschrift WO 2009/019022 A2 ist bereits eine Vorrichtung mit den Merkmalen des Oberbegriffs des Anspruchs 1 bekannt.

### Offenbarung der Erfindung

Die erfindungsgemäße Vorrichtung mit den Merkmalen des Anspruchs 1 hat den Vorteil, dass auch bei einem Ausfall oder einer Fehlfunktion in einem der Teilsysteme, also beispielsweise in der ABS-Einrichtung oder in der Bremskraftunterstützungseinrichtung, ein Weiterbetrieb des Kraftfahrzeugs und insbesondere des Bremssystems möglich ist, wenn auch mit verringerter Funktion. Der Ausfall einer der Einrichtungen oder eines Teilsystems wird dem Fahrer oder den Insassen des Kraftfahrzeugs bevorzugt angezeigt, sodass diese handeln und beispielsweise die nächste Werkstatt ansteuern können. Würde das Bremssystem insgesamt ausfallen, wäre ein derartiges Manöver gegebenenfalls nicht mehr möglich. Dadurch wird durch die erfindungsgemäße Vorrichtung ein vorteilhafter Weiterbetrieb des Kraftfahrzeugs beziehungsweise ein Notbetrieb ermöglicht, und das obwohl ein gemeinsames Bremssystemsteuergerät beide Funktionen beziehungsweise beide Einrichtungen ansteuert. Erfindungsgemäß wird dies dadurch erreicht, dass die Steuereinheiten als anwenderspezifische integrierte Schaltungen ausgebildet und mit einem Mikroprozessor zu ihrer Ansteuerung verbunden sind, wobei der Mikroprozessor für jede der Schaltungen einen eignen Abschaltpfad aufweist. Damit werden die beiden genannten Einrichtungen unabhängig voneinander durch die jeweiligen anwenderspezifischen integrierten Schaltungen (ASICs) betrieben, wobei die Schaltungen zu dem Mikroprozessor jeweils einen eigenen Abschaltpfad aufweisen, sodass sie unabhängig voneinander durch den Mikroprozessor deaktiviert werden können, um einen Weiterbetrieb der jeweiligen Einrichtung beziehungsweise Funktion zu verhindern. Die verbleibende Steuereinheit betreibt die ihr zugeordnete Einrichtungen weiter, sodass das Bremssystem zumindest in einem Notbetrieb weiter verfügbar steht. Bevorzugt sind die Schaltungen (ASICs) auf einer gemeinsamen Leiterplatte angeordnet, vorzugsweise in einem gemeinsamen Gehäuse.

Weiterhin ist bevorzugt vorgesehen, dass die Schaltungen jeweils wenigstens eine Endstufe, bevorzugt mehrere Endstufen, zum Ansteuern von elektrisch, insbesondere elektromagnetisch betätigbaren Hydraulikventilen des Bremssystems aufweisen. Durch die Endstufen werden die Hydraulikventile beziehungsweise deren Aktuatoreinrichtungen mit ausreichend Energie versorgt, um zu öffnen oder zu schließen, sodass ein Hydraulikdruck beispielsweise abgebaut wird, um ein Blockieren eines Rades zu verhindern, oder aufgebaut, um den Fahrer des Kraftfahrzeugs beim Betätigen des Bremssystems zu unterstützen.

Weiterhin ist bevorzugt vorgesehen, dass durch den jeweiligen Abschaltpfad die jeweilige Endstufe deaktivierbar ist. Die Abschaltpfade wirken sich somit auf die Endstufen aus und ermöglichen, dass die jeweilige Endstufe durch den Mikroprozessor deaktiviert und damit eine weitere Bestromung des jeweiligen Hydraulikventils unterbunden wird.

Weiterhin ist bevorzugt vorgesehen, dass jeder Schaltung ein betätigbarer Schalter zugeordnet ist, durch welchen die jeweilige Schaltung mit einer Versorgungsspannung verbindbar oder von dieser trennbar ist. Ist der jeweilige Schalter geschlossen, ist die Endstufe mit der Versorgungsspannung verbunden, sodass sie durch den Mikroprozessor beziehungsweise die jeweilige Schaltung angesteuert werden kann. Wird der Schalter geöffnet, so wird die elektrische Verbindung zur Versorgungsspannung getrennt und die Endstufe ist nicht weiter betreibbar. Dadurch wird die Sicherheit vor einer Fehlfunktion oder für eines Fehlbetriebs einer der Einrichtungen, insbesondere eines der Hydraulikventile, sicher verhindert, wenn der jeweilige Schalter geöffnet wird.

Der Mikroprozessor ist bevorzugt dazu ausgebildet, das Bremssystem auf Fehlfunktionen zu überwachen und in Abhängigkeit von einer erfassten Fehlfunktion die zumindest eine der Schaltungen durch den jeweiligen Abschaltpfad zu deaktivieren. Insbesondere wird durch das Abschalten, wie zuvor bereits erwähnt, die jeweilige Endstufe deaktiviert und besonders bevorzugt von der Versorgungsspannung getrennt. Mikroprozessoren, die Systeme auf Fehlfunktionen überwachen, sind grundsätzlich bekannt, sodass auf diese an dieser Stelle nicht näher eingegangen werden soll. Von Bedeutung für die Erfindung ist, dass bei einer erfassten Fehlfunktion der Mikroprozessor einen oder beide Abschaltpfade ansteuert, um die jeweilige Einrichtung beziehungsweise die jeweilige Schaltung zu deaktivieren.

Insbesondere ist der Mikroprozessor dazu ausgebildet, in Abhängigkeit von einer erfassten Fehlfunktion zumindest einen der Schalter anzusteuern. Wie zuvor bereits erwähnt, wird durch das Betätigen der Schalter die jeweilige Endstufe von der Versorgungsspannung getrennt und dadurch eine Fehlfunktion oder die Auswirkung einer Fehlfunktion unterbunden.

Weiterhin ist bevorzugt vorgesehen, dass bei Erfassen einer Fehlfunktion nur eine der Schaltungen deaktiviert und optional der dieser Schaltung zugeordnete Schalter zum Trennen der Schaltung von der Versorgungsspannung angesteuert werden. In Abhängigkeit von der Fehlfunktion entscheidet der Mikroprozessor, ob nur die Schaltung oder auch der der Schaltung zugeordnete Schalter angesteuert werden muss, um einen Fehlbetrieb der ausgewählten Einrichtung und damit des Bremssystems insgesamt zu vermeiden und einen Notbetrieb zu ermöglichen.

Weiterhin ist bevorzugt vorgesehen, dass bei Erfassen einer Fehlfunktion der ABS-Einrichtung die erste Schaltung und optional der erste Schalter deaktiviert werden. Entsprechend ist bevorzugt vorgesehen, dass beim Erfassen einer Fehlfunktion der Bremskraftunterstützungseinrichtung durch den Mikroprozessor nur die zweite Schaltung deaktiviert und der zweite Schalter zum Trennen der Endstufe von der Versorgungsspannung angesteuert wird. Es ergeben sich hierdurch die bereits genannten Vorteile.

Das erfindungsgemäße Verfahren mit den Merkmalen des Anspruchs 10 zeichnet sich dadurch aus, dass die ABS-Einrichtung und die Bremskraftunterstützungseinrichtung auf Fehlfunktionen überwacht werden, und dass in Abhängigkeit von einer erfassten Fehlfunktion zumindest eine der Steuereinheiten von dem Mikroprozessor durch den jeweiligen Abschaltpfad deaktiviert wird. Hierdurch ergeben sich die bereits erwähnten Vorteile.

Weitere Vorteile und bevorzugte Merkmale und Merkmalskombinationen ergeben sich insbesondere aus dem zuvor Beschriebenen sowie aus den Ansprüchen.

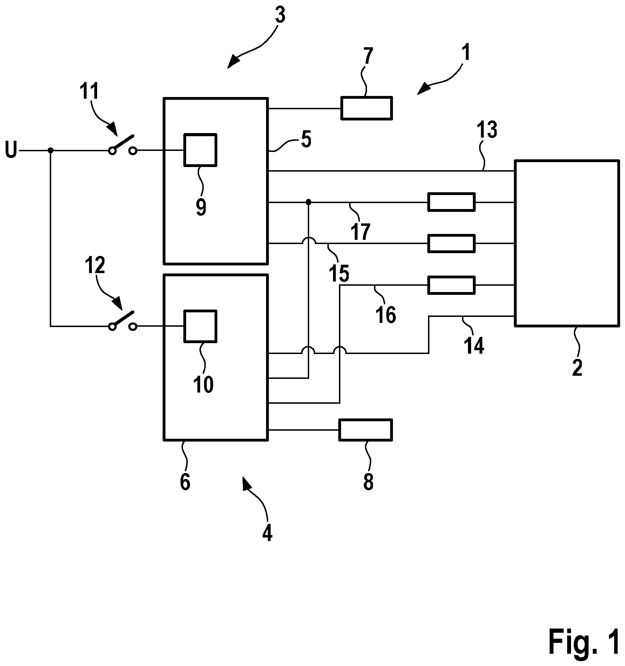

Im Folgenden soll die Erfindung anhand der Zeichnung näher erläutert werden. Dazu zeigt die einzige
- Figur: eine Vorrichtung zum Betreiben eines Bremssystems eines hier nicht näher dargestellten Kraftfahrzeugs.

Die Figur zeigt eine Vorrichtung 1 zum Betreiben eines Bremssystems eines hier nicht näher dargestellten Kraftfahrzeugs. Die Vorrichtung 1 ist dabei als Steuergerät ausgebildet und weist einen Mikroprozessor 2 auf, welcher ein Verfahren zum Betreiben des Bremssystems durchführt, das unter anderem eine Überwachung des Bremssystems auf Fehlfunktionen umfasst. Weiterhin weist die Vorrichtung 1 eine erste Steuereinheit 3 und eine zweite Steuereinheit 4 auf, die jeweils als anwenderspezifische integrierte Schaltungen 5 beziehungsweise 6 ausgebildet sind. Dabei ist die erste Steuereinheit 3 einer ABS-Einrichtung 7 und die zweite Steuereinheit 4 einer elektrischen Bremskraftunterstützungseinrichtung 8 des Bremssystems zugeordnet. Beide Einrichtungen 7, 8 weisen jeweils eine oder mehrere elektrisch betätigbare Hydraulikventile auf, die im Hydraulikkreis des Bremssystems wirken. Die Hydraulikventile der ABS-Einrichtung (ABS = Antiblockiersystem) dienen dazu, einen Hydraulikdruck bei Bedarf zu verringern, um ein Bremsmoment zu reduzieren, sodass ein Blockieren zumindest eines Rads des Kraftfahrzeugs verhindert wird. Das oder die Hydraulikventile der Bremskraftunterstützungseinrichtung dienen beispielsweise dazu, bei Ansteuerung ein Hydraulikdruck in dem Bremssystem zu erhöhen, um den Fahrer beim Betätigen des Bremspedals zu unterstützen, sodass die in dem Bremssystem erzeugte Hydraulikkraft nicht ausschließlich von der Betätigungskraft des Fahrers abhängt. Eine derartige Bremskraftunterstützungseinrichtung ersetzt beispielsweise den herkömmlichen Vakuumkraftverstärker.

Zum Ansteuern der Hydraulikventile weisen die Schaltungen 5 und 6 jeweils Endstufen 9 und 10 auf, die mit einer Spannungsversorgung U verbunden sind. In der jeweiligen Verbindung zu Spannungsversorgung U ist dabei ein betätigbarer Schalter 11 beziehungsweise 12 angeordnet. Die Schalter 11, 12 sind bevorzugt ebenfalls durch den Mikroprozessor 2 ansteuerbar, um bei Bedarf die Endstufen 9, 10 von der Spannungsversorgung U zu trennen. Bevorzugt sind die Schaltungen 5, 6 insbesondere zusammen mit den Endstufen 9, 10 auf einer gemeinsamen Leiterplatte in einem Gehäuse, insbesondere Steuergerätgehäuse, angeordnet.

Der Mikrokontroller 2 ist mit den beiden Steuereinheiten 3, 4 durch jeweils ein BUS-System 13 beziehungsweise 14, insbesondere Serial Peripheral Interface, zu deren Ansteuerung verbunden.

Darüber hinaus ist der Mikrokontroller durch einen Abschaltpfad 15 mit der Schaltung 5 und durch einen Abschaltpfad 16 mit der Schaltung 6 verbunden. Außerdem ist der Mikrokontroller durch einen Abschaltpfad 17 mit beiden Schaltungen 5 und 6 verbunden.

Durch die vorgestellte Vorrichtung 1 wird die Verfügbarkeit des Bremssystems auch bei Auftreten einer Fehlfunktion erhöht. Es wird vermieden, dass eine Fehlfunktion dazu führt, dass das gesamte Bremssystem ausfällt. Die durch das im Folgenden beschriebene kaskadierte Abschaltkonzept gewonnene höhere

Verfügbarkeit führt dazu, dass der Fahrer seltener in eine Situation kommt, in der eine gewünschte Funktion nicht zur Verfügung steht. Hierzu ist die Überwachung des Bremssystems durch den Mikrokontroller 2 von besonderer Bedeutung. Der Mikrokontroller 2 überwacht das System zunächst auf Fehlfunktion und klassifiziert die jeweils erfasste Fehlfunktion, um im Anschluss das Bremssystem insgesamt in einer Betriebsart mit eingeschränkter Funktionalität, also in einen Notbetrieb, weiter zu betreiben.

Dem liegt die Idee zugrunde, die Hauptfunktion des ABS- und der Bremskraftunterstützung durch die separaten Schaltungen 5, 6 durchzuführen und mit unabhängigen Abschaltpfaden zu versehen. Die beiden Schaltungen 5, 6 können vom Typ her gleich ausgebildet sein, wichtig ist, dass die Zuordnung der Hydraulikventile zu den Schaltungen 5, 6 gemäß ihrer Funktion erfolgt.

Durch den jeweiligen Abschaltpfad 15, 16 sind insbesondere die Endstufen 9, 10 der Schaltungen 5, 6 abschaltbar beziehungsweise deaktivierbar. Erfolgt ein Abschaltbefehl über den Abschaltpfad 17, werden beide Endstufen 9, 10 abgeschaltet. Dies ist beispielsweise dann der Fall, wenn die Fehlfunktion derart schwerwiegend ist, dass ein sicherer Betrieb des Kraftfahrzeugs beziehungsweise des Bremssystems mit der Fehlfunktion nicht mehr gewährleistet werden kann.

Erfasst der Mikrokontroller 2 beispielsweise eine Fehlfunktion in einem für die ABS-Regelung benötigten Hydraulikventil, das durch die Schaltung 5 angesteuert wird, sendet er einen Abschaltbefehl durch den Abschaltpfad 15 an die Schaltung 5, um die Endstufe 9 zu deaktivieren. Zusätzlich steuert der Mikroprozessor 2 außerdem den Schalter 11 an, um die Verbindung zu Spannungsversorgung zu trennen. Die zweite Schaltung 6 läuft weiter und ermöglicht weiterhin eine uneingeschränkte Bremskraftunterstützung.

Fällt hingegen ein zum Druckaufbau benötigtes Bauteil aus, beispielsweise ein dem Bremsdruckaufbau zugeordnetes Hydraulikventil, so wird entsprechend die Schaltung 6 deaktiviert und insbesondere der Schalter 12 geöffnet. In diesem Fall steht dann noch die ABS-Funktion durch die Schaltung 5 uneingeschränkt zur Verfügung.

## Patentansprüche

1. Vorrichtung (1) zum Betreiben eines Bremssystems eines Kraftfahrzeugs, mit einer ersten Steuereinheit (3) zum Betreiben einer ABS-Einrichtung des Bremssystems und mit einer zweiten Steuereinheit (4) zum Betreiben einer Bremskraftunterstützungseinrichtung des Bremssystems, **dadurch gekennzeichnet, dass** die Steuereinheiten (3,4) als anwenderspezifische integrierte Schaltungen (5,6) ausgebildet und mit einem Mikroprozessor (2) zu ihrer Ansteuerung verbunden sind, wobei der Mikroprozessor (2) für jede der Schaltungen (5,6) einen eigenen Abschaltpfad (15,16) aufweist.

2. Vorrichtung nach Anspruch 1, **dadurch gekennzeichnet, dass** die Schaltungen (5,6) jeweils wenigstens eine Endstufe (9,10) zum Ansteuern insbesondere von Hydraulikventilen des Bremssystems aufweisen.

3. Vorrichtung nach einem der vorhergehenden Ansprüche, **dadurch gekennzeichnet, dass** durch den jeweiligen Abschaltpfad (15,16) die jeweilige Endstufe (9,10) deaktivierbar ist.

4. Vorrichtung nach einem der vorhergehenden Ansprüche, **dadurch gekennzeichnet, dass** jeder Schaltung (5,6) ein betätigbarer Schalter (11,12) zugeordnet ist, durch welchen die jeweilige Schaltung (5,6) mit einer Versorgungsspannung (U) verbindbar oder von dieser trennbar ist.

5. Vorrichtung nach einem der vorhergehenden Ansprüche, **dadurch gekennzeichnet, dass** der Mikroprozessor (2) dazu ausgebildet ist, das Bremssystem auf Fehlfunktionen zu überwachen und in Abhängigkeit von einer erfassten Fehlfunktion zumindest eine der Schaltungen (5,6) durch den jeweiligen Abschaltpfad (15,16) zu deaktivieren.

6. Vorrichtung nach einem der vorhergehenden Ansprüche, **dadurch gekennzeichnet, dass** der Mikroprozessor (2) dazu ausgebildet ist, in Abhängigkeit von einer erfassten Fehlfunktion zumindest einen der Schalter (11,12) anzusteuern.

7. Vorrichtung nach einem der vorhergehenden Ansprüche, **dadurch gekennzeichnet, dass** bei Erfassen einer Fehlfunktion nur eine der Schaltungen (5,6) deaktiviert und optional der dieser Schaltung (5,6) zugeordnete Schalter (11,12) zum Trennen der Schaltung (5,6) von der Versorgungsspannung (U) angesteuert werden.

8. Vorrichtung nach einem der vorhergehenden Ansprüche, **dadurch gekennzeichnet, dass** bei Erfassen einer Fehlfunktion der ABS-Einrichtung nur die erste Schaltung (5) und optional der erste Schalter (11) zum Trennen der Endstufe (9) der ersten Schaltung (5) von der Versorgungsspannung (U) angesteuert werden.

9. Vorrichtung nach einem der vorhergehenden Ansprüche, **dadurch gekennzeichnet, dass** beim Erfassen einer Fehlfunktion Bremskraftunterstützungseinrichtung nur die zweite Schaltung (6) deaktiviert und optional der zweite Schalter (12) zum Trennen der Endstufe (10) der zweiten Schaltung (6) von der Versorgungsspannung (U) angesteuert werden.

10. Verfahren zum Betreiben eines Bremssystems eines Kraftfahrzeugs, mittels einer Vorrichtung (1) nach einem der Ansprüche 1 bis 9, wobei eine ABS-Einrichtung durch eine erste Steuereinheit und eine Bremskraftunterstützungseinrichtung durch eine zweite Steuereinheit angesteuert werden, wobei die ABS-Einrichtung und die Bremskraftunterstützungseinrichtung auf Fehlfunktionen überwacht werden, **dadurch gekennzeichnet, dass** in Abhängigkeit von einer erfassten Fehlfunktion zumindest eine der Steuereinheiten (3,4) von dem Mikroprozessor durch den jeweiligen Abschaltpfad deaktiviert wird.

## Claims

1. Apparatus (1) for operating a brake system of a motor vehicle, having a first control unit (3) for operating an ABS device of the brake system and having a second control unit (4) for operating a brake servo device of the brake system, **characterized in that** the control units (3, 4) are designed as user-specific integrated circuits (5, 6) and are connected to a microprocessor (2) in order to be actuated, wherein the microprocessor (2) has a dedicated disconnection path (15, 16) for each of the circuits (5, 6).

2. Apparatus according to Claim 1, **characterized in that** the circuits (5, 6) each have at least one output stage (9, 10) for actuating, in particular, hydraulic valves of the brake system.

3. Apparatus according to either of the preceding claims, **characterized in that** the respective output stage (9, 10) can be deactivated by way of the respective disconnection path (15, 16).

4. Apparatus according to one of the preceding claims, **characterized in that** each circuit (5, 6) has an associated operable switch (11, 12) by way of which the respective circuit (5, 6) can be connected to a supply voltage (U) or can be disconnected therefrom.

5. Apparatus according to one of the preceding claims, **characterized in that** the microprocessor (2) is designed to monitor the brake system for malfunctions and to deactivate at least one of the circuits (5, 6) by way of the respective disconnection path (15, 16) depending on a detected malfunction.

6. Apparatus according to one of the preceding claims, **characterized in that** the microprocessor (2) is designed to actuate at least one of the switches (11, 12) depending on a detected malfunction.

7. Apparatus according to one of the preceding claims, **characterized in that**, when a malfunction is detected, only one of the circuits (5, 6) is deactivated and optionally the switch (11, 12), that is associated with the said circuit (5, 6), for disconnecting the circuit (5, 6) from the supply voltage (U) is actuated.

8. Apparatus according to one of the preceding claims, **characterized in that**, when a malfunction in the ABS device is detected, only the first circuit (5) and optionally the first switch (11) for disconnecting the output stage (9) of the first circuit (5) from the supply voltage (U) are actuated.

9. Apparatus according to one of the preceding claims, **characterized in that**, when a malfunction in the brake servo device is detected, only the second circuit (6) is deactivated and optionally the second switch (12) for disconnecting the output stage (10) of the second circuit (6) from the supply voltage (U) is actuated.

10. Method for operating a brake system of a motor vehicle, by means of an apparatus (1) according to one of Claims 1 to 9, wherein an ABS device is actuated by a first control unit and a brake servo device is actuated by a second control unit, wherein the ABS device and the brake servo device are monitored for malfunctions, **characterized in that** at least one of the control units (3, 4) is deactivated by the microprocessor by way of the respective disconnection path, depending on a detected malfunction.

## Revendications

1. Dispositif (1) permettant de faire fonctionner un système de freinage d'un véhicule automobile, comprenant une première unité de commande (3) pour faire fonctionner un équipement ABS du système de freinage et une deuxième unité de commande (4) permettant pour faire fonctionner un équipement d'assistance au freinage du système de freinage,
**caractérisé en ce que** les unités de commande (3, 4) sont réalisées sous la forme de circuits intégrés spécifiques à l'utilisateur (5, 6) et sont reliées à un microprocesseur (2) en vue de leur pilotage, le microprocesseur (2) présentant un chemin de coupure (15, 16) spécifique pour chacun des circuits (5, 6).

2. Dispositif selon la revendication 1, **caractérisé en ce que** les circuits (5, 6) présentent respectivement au moins un étage de sortie (9, 10) pour piloter en particulier des vannes hydrauliques du système de freinage.

3. Dispositif selon l'une quelconque des revendications précédentes, **caractérisé en ce que** le chemin de coupure (15, 16) respectif permet de désactiver l'étage de sortie (9, 10) respectif.

4. Dispositif selon l'une quelconque des revendications précédentes, **caractérisé en ce qu'**à chaque circuit (5, 6) est associé un commutateur (11, 12) pouvant être actionné qui permet de connecter le circuit respectif (5, 6) à une tension d'alimentation (U) ou de le déconnecter de celle-ci.

5. Dispositif selon l'une quelconque des revendications précédentes, **caractérisé en ce que** le microprocesseur (2) est réalisé pour surveiller le système de freinage quant à des dysfonctionnements, et pour désactiver au moins l'un des circuits (5, 6) par le chemin de coupure (15, 16) respectif en fonction d'un dysfonctionnement détecté.

6. Dispositif selon l'une quelconque des revendications précédentes, **caractérisé en ce que** le microprocesseur (2) est réalisé pour piloter au moins l'un des commutateurs (11, 12) en fonction d'un dysfonctionnement détecté.

7. Dispositif selon l'une quelconque des revendications précédentes, **caractérisé en ce que** lors de la détection d'un dysfonctionnement, un seul des circuits (5, 6) est désactivé, et en option, le commutateur (11, 12) associé à ce circuit (5, 6) est piloté pour déconnecter le circuit (5, 6) de la tension d'alimentation (U).

8. Dispositif selon l'une quelconque des revendications précédentes, **caractérisé en ce que** lors de la détection d'un dysfonctionnement de l'équipement ABS, seul le premier circuit (5), et en option le premier commutateur (11), sont pilotés pour déconnecter l'étage de sortie (9) du premier circuit (5) de la tension d'alimentation (U).

9. Dispositif selon l'une quelconque des revendications précédentes, **caractérisé en ce que** lors de la détection d'un dysfonctionnement de l'équipement d'assistance au freinage, seul le deuxième circuit (6) est désactivé, et en option le deuxième commutateur (12) est piloté pour déconnecter l'étage de sortie (10) du deuxième circuit (6) de la tension d'alimentation (U) .

10. Procédé permettant de faire fonctionner un système de freinage d'un véhicule automobile au moyen d'un dispositif (1) selon l'une quelconque des revendications 1 à 9, dans lequel un équipement ABS est piloté par une première unité de commande et un équipement d'assistance au freinage est piloté par une deuxième unité de commande, l'équipement ABS et l'équipement d'assistance au freinage étant surveillés quant à des dysfonctionnements,
**caractérisé en ce qu'**en fonction d'un dysfonctionnement détecté, au moins l'une des unités de commande (3, 4) est désactivée par le microprocesseur par le chemin de coupure respectif.
